# EUROPEAN PATENT APPLICATION

(11) **EP 3 726 404 A1**
(43) Date of publication of application: **21.10.2020**
(21) Application number: 19170168.9
(22) Date of filing: 18.04.2019
(51) Int. Cl.: G06F 21/10

(54) **PRODUCT MANAGEMENT SYSTEM AND METHOD FOR EXCHANGING PRODUCTS STORED IN THE PRODUCT MANAGEMENT SYSTEM**

(71) Applicant: Siemens Aktiengesellschaft, 80333 München (DE)
(72) Inventor: Akbag, Emre, 90469 Nürnberg (DE); Wahl, Alexander, 90530 Wendelstein (DE)

(57) **Abstract**

In order to facilitate an exchange of digital products within a digital distribution platform, a plurality of digital products are stored in a cloud, and the cloud processes a request for a first digital product of the plurality in exchange for a second digital product of the plurality. The cloud determines a source of the request and transmits the request to a client associated with the first digital product when the cloud determines the source of the request is associated with the second digital product. The cloud receives an answer to the request from the client and provides the first digital product to the source of the request and provides the second digital product to the client when the answer is a positive answer.

## Description

### BACKGROUND

A digital distribution platform allows users to browse and purchase applications that have been developed for a particular operating system. A developer of an application pays, for example, a one-time fee or an annual fee to a company that runs the digital distribution platform (e.g., the company) to upload the application to the digital distribution platform and make the application available for purchase. A user of the digital distribution platform interacts with a graphical user interface (GUI) at a computing device to purchase the application, providing monetary compensation to the company in exchange for the user downloading a copy of the application. The company then provides at least a portion of the monetary compensation to the developer.

### SUMMARY

In order to facilitate an exchange of digital products within a digital distribution platform, a plurality of digital products are stored in a cloud, and the cloud processes a request for a first digital product of the plurality in exchange for a second digital product of the plurality. The cloud determines a source of the request and transmits the request to a client associated with the first digital product when the cloud determines the source of the request is associated with the second digital product. The cloud receives an answer to the request from the client and provides the first digital product to the source of the request and provides the second digital product to the client when the answer is a positive answer.

In a first aspect, a method for exchanging products stored within a data management system includes providing a database including a plurality of datasets. A first dataset of the plurality of datasets is associated with a first client in communication with the database. A second dataset of the plurality of datasets is associated with a second client in communication with the database. The method also includes receiving, by a processor in communication with the database, a request for the second dataset in exchange for the first dataset. The processor determines a source of the request for the second dataset in exchange for the first dataset. The processor also compares the determined source to user identification data of the first dataset, and transmits the request to the second client based on the comparison. The processor receives an answer to the request from the second client, and provides at least a portion of the second dataset to the first client and at least a portion of the first dataset to the second client when the received answer is a positive answer.

In a second aspect, a system for exchanging stored products includes a database. The database includes a first dataset and a second dataset. The first datasets is associated with a first client in communication with the database. The second dataset is associated with a second client in communication with the database. Each dataset of the first dataset and the second dataset represents computer code, an application programming interface (API), a data model, a computer system configuration, an application, or any combination thereof. The system also includes a processor in communication with the database. The processor is configured to receive a request for the second dataset in exchange for the first dataset from the first client, identify the second client based on the received request, and transmit the request to the second client. The processor is further configured to receive an answer to the request from the second client, and provide at least a portion of the second dataset to the first client and at least a portion of the first dataset to the second client when the received answer is a positive answer.

In a third aspect, a method for exchanging products stored within a data management system includes displaying, by a display of a first client, a graphical user interface (GUI). The GUI includes a representation of a first application associated with the first client, a first user, or the first client and the first user, and a representation of a second application associated with a second client, a second user, or the second client and the second user. The first application and the second application are stored at a database in communication with the first client and the second client. The method also includes receiving, by a first processor of the first client, an input from the first user at the first client. The input identifies selection of the representation of the first application within the GUI, selection of the representation of the second application within the GUI, or the selection of the representation of the first application and the selection of the representation of the second application within the GUI. The processor is in communication with the display. The first processor generates a request for the second application in exchange for the first application based on the received input.

### BRIEF DESCRIPTION OF THE DRAWINGS

The examples of the invention described below can be better understood with reference to the following figures. The components in the figures are not necessarily to scale, emphasis instead being placed upon illustrating the principles of the invention. In the figures, like reference numerals designate corresponding parts throughout the different views.
- FIG. 1: shows one embodiment of a system for sharing data among a plurality of users of an enterprise resource management architecture;
- FIG. 2: shows one embodiment of a computer system for use with the system of FIG. 1;
- FIG. 3: shows a flowchart of one embodiment of a method for exchanging products stored within a data management system;
- FIG. 4: shows a flowchart of another embodiment of a method for exchanging products stored within a data management system; and
- FIG. 5: shows an example of a graphical user interface (GUI) for initiating an exchange of products stored within a data management system.

### DETAILED DESCRIPTION

Employees at a first enterprise, for example, develop first applications and/or other data products, and employees at a second enterprise, for example, develop second applications and/or other data products. An employee at the first enterprise needs, for example, a second application developed by the second enterprise but cannot or does not want to spend money from the first enterprise to obtain the second application. For example, the employee needs an application program interface (API) developed by the second enterprise to develop a new product at the first enterprise.

The first enterprise and the second enterprise transmit at least some of the first applications and/or other data products developed by the first enterprise and at least some of the second applications and/or other data products developed by the second enterprise, respectively, to a product management system (e.g., an Internet of things (IoT) product management system). The first applications and/or other data products developed by the first enterprise and the second applications and/or other data products developed by the second enterprise may include, for example, applications directed to automation and/or control of devices and appliances (e.g., light fixtures, thermostats, home security systems, cameras and other home appliances). In other words, first applications and/or other data products developed by the first enterprise and the second applications and/or other data products developed by the second enterprise may include applications related to, for example, enabling a smart home.

The product management system stores the transmitted first applications and/or other data products developed by the first enterprise and the transmitted second applications and/or other data products developed by the second enterprise (e.g., in the cloud). Additional and/or different enterprises may transmit data products to the product management system for storage. Additionally or alternatively, independent developers (e.g., not employed by an enterprise) may transmit data products to the product management system for storage.

Using a computing device (e.g., at the first enterprise) in communication with the product management system, the employee may transmit identification information such as, for example, a username and a password to the product management system. The identification information may identify the employee herself or the first enterprise, at which the employee works. Based on the transmitted identification information, the product management system may identify data products associated with the first enterprise that are stored at the product management system. The product management system may transmit representations of the data products associated with the first enterprise, respectively, to be displayed by a graphical user interface (GUI) running at the computing device. The GUI may also display representations of data products developed by other enterprises (e.g., the second enterprise) and/or individuals available for exchange.

The employee of the first enterprise may interact with the GUI at the computing device to generate and transmit a request for, for example, the API developed by the second enterprise to the product management system. The request may be a request for the API in exchange for one or more of the first applications and/or other data products developed by the first enterprise (e.g., source code developed by the first enterprise). The product management system identifies an enterprise or individual associated with the requested source code (e.g., the second enterprise) and initiates a handshake between the computing device at the first enterprise and a computing device at the second enterprise.

The product management system transmits the request to and receives an answer from the identified second enterprise. If the second enterprise (e.g., an employee at the second enterprise or the computing device at the second enterprise automatically) accepts the request, the product management system transmits the API to the computing device of the first enterprise and transmits the source code to the computing device of the second enterprise. If the second enterprise rejects the request, the product management system transmits the rejection or data representing the rejection to the first enterprise (e.g., the computing device at the first enterprise).

The product management system of the present embodiments allows data products developed by different entities (e.g., enterprises or individuals) to be exchanged without exchanging money. This may speed up the development of new products, as an enterprise or an individual may not need to delay product development to raise money to purchase a tool necessary for the product development. Instead, a data product (e.g., a tool that may increase time to market speed for the second enterprise) may be exchanged for the necessary tool instead of or in addition to a lesser amount of money compared to the standard purchase price.

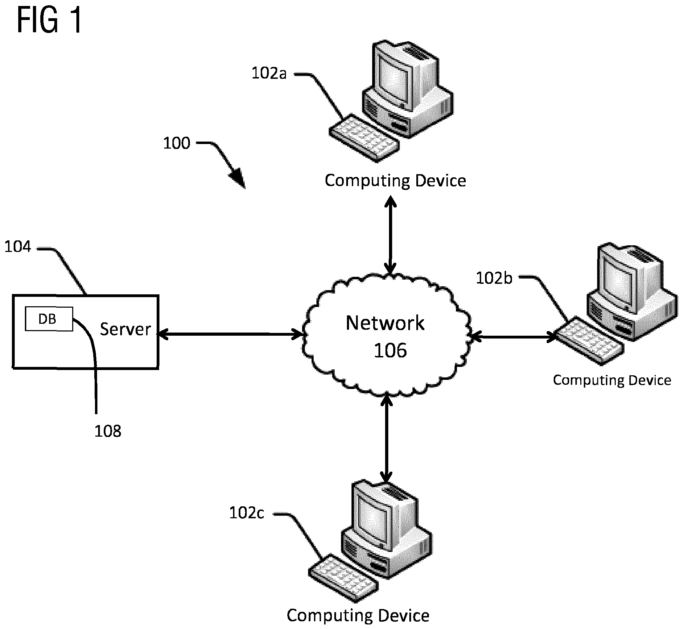

FIG. 1 shows one embodiment of a product management system 100 for exchanging products from different clients and stored in the product management system 100. The system 100 includes a plurality of computing devices 102 (e.g., a first computing device 102a or client, a second computing device 102b or client, and a third computing device 102c or client) in communication with a server 104 via a network 106. Figure 1 shows three computing devices 102. The system 100 may include more or fewer computing devices 102. One or more of the computing devices 102 may represent a plurality of computing devices in communication with each other.

The server 104 may form an enterprise cloud for storing and exchanging products (e.g., Internet of things (IoT) applications). The server 104 includes a database 108. Users (e.g., workers at one or more enterprises) may use the plurality of computing devices 102 to receive and/or generate data and transmit the data to the server 104. The system 100 may include more or fewer computing devices 102. Each computing device of the plurality of computing devices 102 and the server 104 may be located in the same or different rooms, the same or different facilities, or the same or different enterprise campuses. In one embodiment, the plurality of computing devices 102 may be operated by different enterprises, and the server 104 may be operated by another enterprise. In another embodiment, at least one computing device of the plurality of computing devices 102 is a computing device of a developer that does not work at an enterprise (e.g., an independent developer). The plurality of computing devices 102 may be operated in one or more first geographic locations, and the server 104 may be operated in a second geographic location, the second geographic location being remote from the first geographic location. The database 108 may be included within the server 104 or may be separate from the server 108. The system 100 may include more databases 108 within the server 104 or separate from the server 104.

The database 108 includes a plurality of datasets. Each dataset of the plurality of datasets may include, for example, source code, a computer program representing an application, a set of subroutine definitions, communication protocols, and tools representing an API, a data model, one or more computer system configurations, or any combination thereof.

The respective dataset may include additional and/or different data. For example, each dataset of the plurality of datasets may be associated with one or more individuals and/or enterprises. As an example, the respective dataset may be associated with one or more individuals and/or one or more enterprises that generated the respective dataset and/or other entities that may access the respective dataset. The respective dataset may thus include identification data that identifies the one or more individuals and/or one or more enterprises that generated the respective dataset and/or the other entities that may access the respective dataset. In other words, the respective dataset may include identification data that identifies who and/or what entities may access the respective dataset.

The plurality of datasets include at least a first dataset and a second dataset. The first dataset is associated with, for example, the first computing device 102a, a user working at the first computing device 102a, a first enterprise at which the first computing device 102a is operated, or any combination thereof. The first dataset includes first identification data that identifies the first computing device 102a, the user working at the first computing device 102a, the first enterprise at which the first computing device 102a is operated, or any combination thereof. In one example, the first dataset includes a first computer program representing an application (e.g., a mobile application or a web application). In one embodiment, the first dataset includes more than one data product. For example, the first dataset may include first source code and/or a third computer program in addition to the first computer program.

The second dataset is associated with, for example, the second computing device 102b, a user working at the second computing device 102b, a second enterprise at which the second computing device 102b is operated, or any combination thereof. The second dataset includes second identification data that identifies the second computing device 102b, the user working at the second computing device 102b, the second enterprise at which the second computing device 102b is operated, or any combination thereof. In one example, the second dataset includes a second computer program representing an application (e.g., a mobile application or a web application). In one embodiment, the second dataset includes more than one data product. For example, the second dataset may include second source code and/or a fourth computer program in addition to the second computer program.

The plurality of datasets may include additional and/or different datasets. For example, the plurality of datasets includes a third dataset associated with, for example, the third computing device 102c, a user working at the third computing device 102c, a third enterprise at which the third computing device 102c is operated, or any combination thereof. The first user and/or the first enterprise, and the second user and/or the second enterprise may subscribe to a service provided by the server 104. For example, the first user and the second user may subscribe to a service of storing datasets and facilitating the exchange of datasets at the server 104. Alternatively, the first user and/or the first enterprise, and the second user and/or the second enterprise may pay an enterprise running the server 104 on a per exchange basis. As part of the storage service provided by the server 104, the first user and/or other users at the first enterprise may transmit, via the network 106, datasets associated with, for example, the first enterprise (e.g., the first dataset) to the server 104 for storage in the database 108, and the second user and/or other users at the second enterprise may transmit, via the network 106, datasets associated with, for example, the second enterprise to the server 104 for storage in the database 108. Other users at different and/or additional enterprises and individual developers may subscribe to the services provided by the server 104 and transmit associated datasets to the server 104 for storage.

A processor of the server 104 receives a request (e.g., a first request) for the second dataset from the first computing device 102a. In one example, the request is a request for the second dataset in exchange for the first dataset. In one embodiment, the first user generates the request at the first computing device 102a using one or more input devices of the first computing device 102a. For example, the first user interacts with a first GUI displayed at a display of the first computing device 102a.

As will be explained in more detail below, the first GUI may display graphical representations of a first subset of datasets of the plurality of datasets associated with the first computing device 102a, the first user working at the first computing device 102a, the first enterprise at which the first computing device 102a is operated, or any combination thereof (e.g., associated datasets), and graphical representations of a second subset of datasets of the plurality of datasets associated with other computing devices 102 (e.g., the second computing device), other users (e.g., the second user), other enterprises (e.g., the second enterprise at which the second computing device 102b is operated), or any combination thereof (e.g., other datasets). The graphical representations of the associated datasets and the graphical representations of the other datasets may be separately displayed within the GUI. For example, the graphical representations of the associated datasets may be displayed on a left side of the GUI, and the graphical representations of the other datasets may be displayed on a right side of the GUI. Other positioning of the graphical representations of the associated datasets and/or the other datasets may be provided.

The first user, for example, uses an input device to select a graphical representation of the first dataset and a graphical representation of the second dataset within the GUI. The graphical representation of the first dataset and the graphical representation of the second dataset may be selected in either order within the GUI. More than one of the associated datasets and/or more than one of the other datasets may be selected by the first user within the GUI. The first computing device 102a, for example, may generate the first request based on the selections of the graphical representation of the first dataset and the graphical representation of the second dataset within the GUI by the first user. The first computing device 102a, for example, then transmits the generated request to the server 104 via the network 106, and the server 104 receives the generated request.

The processor of the server 104 determines a source of the request. When generating the request, the first computing device 102a, for example, may include requestor identification information within the request. Alternatively, the first computing device 102a, for example, may transmit the requestor identification information to the server 104 separately from the request. In one embodiment, the first user, for example, enters login data (e.g., a username and a password) to display the graphical representations of the associated datasets at the GUI, and the first computing device 102a, for example, transmits at least some of the login data to the server 104, such that the server 104 may identify the source of the request. The server 104 may identify the source of the request in different ways.

The processor of the server 104 compares the determined source of the request to the first identification data included within the first dataset. In other words, the server 104 determines whether the source of the request (e.g., the first computing device 102a, the first user, and/or the first enterprise) is authorized to offer the first dataset in exchange for the second dataset. Based on the comparison, the server 104 may determine whether the determined source of the request matches the first identification data included within the first dataset.

In one embodiment, a memory of the server 104 (e.g., the database 108) or a memory in communication with the server 104 stores a permission matrix that defines which sources of requests (e.g., users, computing devices, and/or enterprises) are authorized to access which datasets. In other words, the permission matrix defines which entities (e.g., users, computing devices, and/or enterprises) are able to offer and/or request which datasets for exchange and/or which datasets are associated with the different entities.

The permission matrix may be, for example, a tabular dataset that defines, for each dataset of the plurality of datasets, each user (e.g., identified by a login), computing device (e.g., identified by an IP address), and/or enterprise (e.g., identified by a number of IP addresses or a login) that is able to offer the respective dataset as part of a requested exchange. For example, only software developers at the first enterprise may be authorized to offer datasets developed by the first enterprise for exchange. In one embodiment, the permission matrix also defines which datasets each of the entities may request. For example, the second enterprise may not allow the first enterprise to request a fourth dataset of the plurality of datasets associated developed by the second enterprise due to, for example, the first enterprise being main competition of the second enterprise and the importance of the fourth dataset to the business of the second enterprise. Other permissions may be provided in the permission matrix. For example, the permission matrix may define which users, computing devices, and/or enterprises may upload datasets to the server 104 for exchange.

Permissions within the permission matrix may be defined by one or more users at the first enterprise, one or more users at the second enterprise, other users at other enterprises, respectively, and/or individual developers. For example, a user at the first enterprise (e.g., a third user) may transmit data indicating the first user is allowed to offer the first dataset for exchange to the server 104 (e.g., a first permission), and a user at the second enterprise (e.g., a fourth user) may transmit data indicating the first user is allowed to request the second dataset for exchange to the server 104. The processor of the server 104 may edit the permission matrix to include the first permission and/or the second permission. The permission matrix may be updated as more datasets are transmitted to the server 104 for storage and exchange and/or more users (e.g., individual developers, enterprises, computing devices) transmit datasets to be stored at the server 104.

Once the processor of the server 104 determines the first user is authorized to offer the first data for exchange, the processor transmits the received request to, for example, the second computing device 102b via the network 106. For example, once the processor of the server 104 determines, based on the permission matrix, the first computing device 102a, the first user, and/or the first enterprise is authorized to offer the first dataset for exchange, the processor of the server 104 initiates transmission of the received request to the second computing device 102b.

The processor of the server 104 may identify the second computing device 102b as a destination for the request based on the identification information included within the second dataset. In other embodiments, the processor of the server 104 identifies the second computing device 102b as being associated with the second dataset based on different data such as, for example, data that is stored separately from the second dataset and/or the permission matrix. The processor of the server 104 may identify more than one destination for the request. For example, the identification information included within the second dataset may identify a number of computing devices and/or users associated with the second dataset, who is able to authorize an exchange, an order to be followed when communication cannot be established or a response to the request is not received from one of the number of computing devices and/or users associated with the second dataset, whether the request may be sent in parallel to the number of computing devices and/or users associated with the second dataset, other information, or any combination thereof.

In one embodiment, the processor of the server 104 initiates a handshake between the first computing device 102a and the second computing device 102b after the second computing device 102b has been identified as the destination for the request. The first computing device 102a and the second computing device 102b exchange information that establishes protocols of a communication between the first computing device 102a and the second computing device 102b via the network 106.

The second computing device 102b receives the request or a representation of the request. The request, for example, may be displayed graphically at a GUI on a display of the second computing device 102b. The request may be displayed with the same graphical representation of the first dataset and the graphical representation of the second dataset displayed at the first computing device 102a. Alternatively, the request may be represented textually at the second computing device 102b.

The processor of the second computing device 102b receives an answer or a representation of the answer from, for example, the second user via an input device of the second computing device 102b. The answer may be generated in any number of ways including, for example, in response to the user interacting with a graphical representation within the GUI (e.g., a "yes" button or a "no" button) at the second computing device 102b with the input device (e.g., a mouse) or via a text box with the input device (e.g., the mouse and a keyboard). In one example, the processor of the second computing device 102b identifies the second user interaction with the "yes" button within the GUI at the second computing device 102b, and the processor of the second computing device 102b generates data corresponding to the interaction that may be processed as the answer by the processor of the server 104. The processor of the second computing device 102b then transmits the answer to the request to the server 104 via the network 106.

The processor of the server 104 provides the answer to the first computing device 102a and/or provides at least a portion of the first data set (e.g., excluding the identification information) to the second computing device 102b and provides at least a portion of the second data set (e.g., excluding the identification information) to the first computing device 102a via the network 106 based on the answer. For example, when the answer is a negative response to the request (e.g., the "no" button is selected by the second user via the input device of the second computing device 102b), the processor of the server 104 may transmit the answer to the first computing device 102a, and none of the first data set and the second data set is provided to the second computing device 102b and the first computing device 102a, respectively. When the answer is a positive response to the request (e.g., the "yes" button is selected by the second user via the input device of the second computing device 102b), the processor of the server 104 transmits at least the portion of the first dataset stored in the database 108 to the second computing device 102b and transmits at least the portion of the second dataset stored in the database 108 to the first computing device 102a. The second computing device 102b and/or another computing device operating at the second enterprise, for example, may then run the first computer program included within the first dataset, and the first computing device 102a and/or another computing device operating at the first enterprise, for example, may then run the second computer program included within the second dataset. In one embodiment, when the answer is a positive response to the request, the processor of the server 104 also transmits the answer to the first computing device 102a.

If the answer transmitted to the first computing device 102a is a negative answer (e.g., the second user selects the "no" button at the GUI on the second computing device 102b), the first user may, for example, generate another request (e.g., a second request) at the first computing device 102a. For example, to generate the second request, the first user may use the input device to select a graphical representation of a fifth dataset of the plurality of datasets and the graphical representation of the second dataset within the GUI. In other words, the first user alters the first request in response to the answer from the second user and offers a different dataset representing, for example, a fifth computer program in exchange for the portion of the second dataset including the second computer program. In one embodiment, the first user may alter the first request by adding the fifth computer program to the first request, such that the fifth computer program and the first computer program are offered in exchange for the second computer program. Any number of datasets may be offered in exchange for any number of datasets.

The first computing device 102a transmits the second request to the server 104 via the network 106, and a processor of the server 104 receives the second request. The server 104 transmits the second request to the second computing device 102b via the network 106. The second user generates a second answer at the second computing device 102b, and the second computing device 102b transmits the second answer to the server 104 via the network 106. Based on the second answer, the server 104 provides at least a portion of the fifth dataset to the second computing device 102b and provides at least the portion of the second dataset to the first computing device 102a and/or transmits the second answer to the first computing device 102a via the network 106.

In one embodiment, the answer to the request is a counteroffer. For example, the second computing device 102b receives the request, and the second user views the request at the display of the second computing device 102b. Instead of generating the answer by, for example, selecting the "no" button or the "yes" button within the GUI at the second computing device 102b, the second user, using the input device of the second computing device 102b, selects a graphical representation of another dataset of the plurality of datasets associated with the first user and/or the first enterprise (e.g., a sixth dataset of the plurality of datasets including a sixth computer program) to exchange for the initially requested second dataset. The second computing device 102b generates a third request based on the selection by the second user and transmits the third request to the server 104 via the network 106. The server 104 transmits the third request to the first computing device 102 via the network 106, and the first user interacts with the GUI at the first computing device 102a to generate a third answer. The first computing device 102a transmits the third answer to the server 104. Based on the third answer, the server 104 provides at least a portion of the sixth dataset to the second computing device 102b and provides at least the portion of the second dataset to the first computing device 102a and/or transmits the third answer to the second computing device 102b via the network 106.

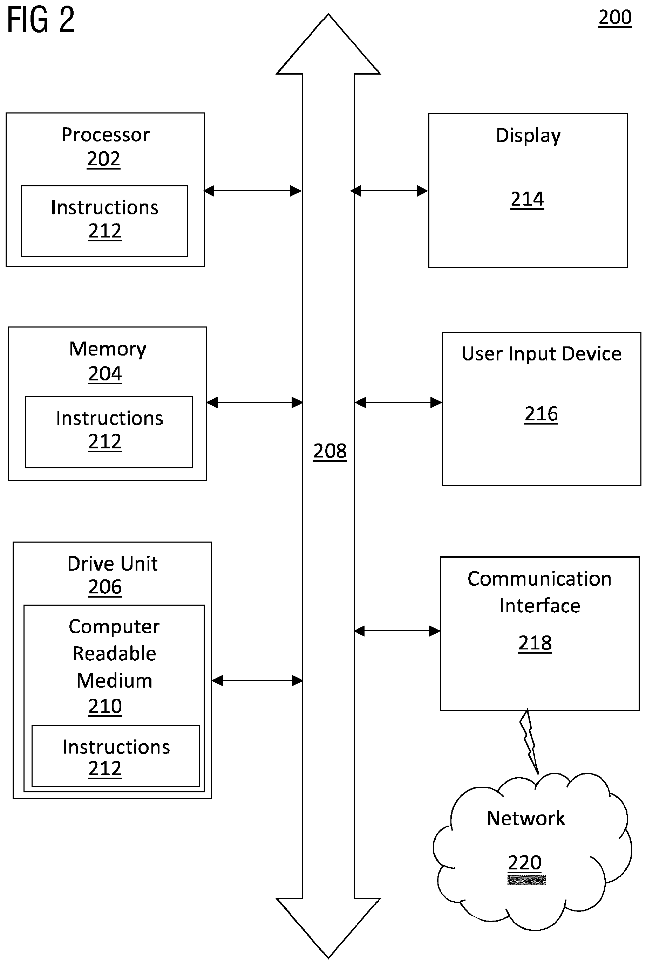

FIG. 2 shows an illustrative embodiment of a general computer system 200. The computer system 200 may include a set of instructions that may be executed to cause the computer system 200 to perform any one or more of the methods or computer based functions disclosed herein. The computer system 200 may operate as a standalone device or may be connected (e.g., using the network 106) to other computer systems or peripheral devices. Any of the components discussed above (e.g., the first computing device 102a, the second computing device 102b, the third computing device 102c, and/or the server 104) may be a computer system 200 or a component in the computer system 200.

In a networked deployment, the computer system 200 may operate in the capacity of a server or as a client user computer in a client-server user network environment, or as a peer computer system in a peer-to-peer (or distributed) network environment. The computer system 200 may also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In one embodiment, the computer system 200 may be implemented using electronic devices that provide voice, video or data communication. Further, while a single computer system 200 is illustrated, the term "system" shall also be taken to include any collection of systems or sub-systems that individually or jointly execute a set, or multiple sets, of instructions to perform one or more computer functions.

As illustrated in Figure 2, the computer system 200 may include a processor 202, e.g., a central processing unit (CPU), a graphics processing unit (GPU), or both. The processor 202 may be a component in a variety of systems. For example, the processor 202 may be part of a standard personal computer or a workstation. The processor 202 may be one or more general processors, digital signal processors, application specific integrated circuits, field programmable gate arrays, servers, networks, digital circuits, analog circuits, combinations thereof, or other now known or later developed devices for analyzing and processing data. The processor 202 may implement a software program, such as code generated manually (i.e., programmed).

The computer system 200 may include a memory 204 that may communicate via a bus 208. The memory 204 may be representative of the database 108. The memory 204 may be a main memory, a static memory, or a dynamic memory. The memory 204 may include but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one embodiment, the memory 204 includes a cache or random access memory for the processor 202. In alternative embodiments, the memory 204 is separate from the processor 202, such as a cache memory of a processor, the system memory, or other memory. The memory 204 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 204 is operable to store instructions executable by the processor 202. The functions, acts or tasks illustrated in the figures or described herein may be performed by the programmed processor 202 executing the instructions stored in the memory 204. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the computer system 200 may further include a display unit 214, such as a liquid crystal display (LCD), an organic light emitting diode (OLED), a flat panel display, a solid state display, a cathode ray tube (CRT), a projector, a printer or other now known or later developed display device for outputting determined information. The display 214 may act as an interface for the user to see the functioning of the processor 202, or specifically as an interface with the software stored in the memory 204 or in a disk or optical drive unit 206 (e.g., a disk drive unit).

Additionally, the computer system 200 may include an input device 216 configured to allow a user to interact with any of the components of system 200. The input device 216 may be a number pad, a keyboard, or a cursor control device, such as a mouse, or a joystick, touch screen display, remote control or any other device operative to interact with the system 200.

In one embodiment, as depicted in Figure 2, the computer system 200 may also include the disk or optical drive unit 206. The disk drive unit 206 may include a computer-readable medium 210, in which one or more sets of instructions 212 (e.g., software) may be embedded. Further, the instructions 212 may embody one or more of the methods or logic as described herein. In one embodiment, the instructions 212 may reside completely, or at least partially, within the memory 204 and/or within the processor 202 during execution by the computer system 200. The memory 204 and the processor 202 also may include computer-readable media as discussed above.

The present disclosure contemplates a non-transitory computer-readable medium that includes instructions 212 or receives and executes instructions 212 responsive to a propagated signal, so that a device connected to a network 220 may communicate voice, video, audio, images or any other data over the network 220. Further, the instructions 212 may be transmitted or received over the network 220 via a communication port 218. The communication port 218 may be a part of the processor 202 or may be a separate component. The communication port 218 may be created in software or may be a physical connection in hardware. The communication port 218 is configured to connect with the network 220 or another network, external media, the display 214, any other components in system 200, or combinations thereof. The connection with the network 220 may be a physical connection, such as a wired Ethernet connection or may be established wirelessly as discussed below. Likewise, the additional connections with other components of the system 200 may be physical connections or may be established wirelessly.

The network 220 may include wired networks, wireless networks, or combinations thereof, and may be representative of the network 106. The wireless network may be a cellular telephone network, an 802.11, 802.16, 802.20, or WiMax network. Further, the network 220 may be a public network, such as the Internet, a private network, such as an intranet, or combinations thereof, and may utilize a variety of networking protocols now available or later developed including, but not limited to TCP/IP based networking protocols.

While the computer-readable medium is shown to be a single medium, the term "computer-readable medium" includes a single medium or multiple media (e.g., a centralized or distributed database and/or associated caches and servers that store one or more sets of instructions). The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium may include a solid-state memory such as a memory card or other package that houses one or more non-volatile read-only memories. Further, the computer-readable medium may be a random access memory or other volatile rewritable memory. Additionally, the computer-readable medium may include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In one embodiment, dedicated hardware implementations, such as application specific integrated circuits, programmable logic arrays and other hardware devices, may be constructed to implement one or more of the methods described herein. Applications that may include the apparatus and systems of various embodiments may broadly include a variety of electronic and computer systems. One or more embodiments described herein may implement functions using two or more specific interconnected hardware modules or devices with related control and data signals that may be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limiting embodiment, implementations may include distributed processing, component/object distributed processing, and parallel processing. Alternatively, virtual computer system processing may be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

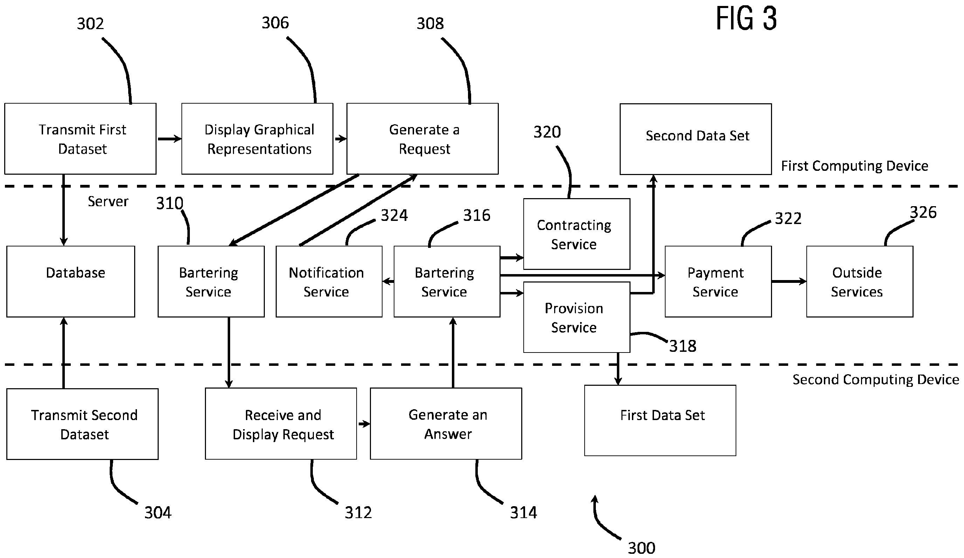

FIG. 3 shows a flowchart of one embodiment of a method 300 for exchanging products stored within a data management system. The method 300 may be performed using the system 100 shown in FIG. 1 or another system. The method 300 is implemented in the order shown, but other orders may be used. Additional, different, or fewer acts may be provided. Similar methods may be used for presenting information relevant to user activity.

In act 302, a first user (e.g., at a first enterprise) using a first computing device (e.g., a first client) transmits at least one first dataset to a server (e.g., a database of the server storing a pool of offerings) via a network, and in act 304, a second user (e.g., at a second enterprise) using a second computing device (e.g., a second client) transmits at least one second dataset to the server (e.g., the database of the server). The database of the server or another database in communication with the server stores the at least one first dataset, which is associated with the first user and/or the first enterprise, the at least one second dataset, which is associated with the second user and/or the second enterprise, and other datasets associated with other users and/or enterprises, respectively. In one embodiment, a first dataset of the at least one first dataset represents a data model, and a second dataset of the at least one second dataset represents an application programming interface (API).

In act 306, a GUI at the first computing device displays a graphical representation for each first dataset of the at least one first dataset associated with the first user and/or the first enterprise. The GUI at the first computing device also displays graphical representations for datasets for which an exchange may be requested. For example, the GUI at the first computing device may display graphical representations for datasets generated by other users at other computing devices and/or enterprises available for exchange.

In act 308, the first computing device generates a request (e.g., a proposed exchange) based on user input at the first computing device. The first user may interact with one or more graphical representations of corresponding datasets within the GUI, and the first computing device may generate the request based on the interaction. For example, using an input device at the first computing device, the first user may select a graphical representation of the data model (e.g., included within the first dataset) and a graphical representation of the API (e.g., included within the second dataset). The first computing device transmits the request to the server via the network.

In act 310, the server receives the request and provides a bartering service to the first computing device and the second computing device. The server identifies a destination of the request. The server may identify the destination of the request based on, for example, the requested second dataset. The first dataset and the second dataset may each include respective identification information identifying the user(s) and/or enterprise that developed the respective dataset and/or other users associated with the respective dataset. The server may identify the dataset requested in the received request (e.g., the second dataset). The server may then identify the destination of the request based on the identification information included within the second dataset stored in the database. The destination of the request may be identified in other ways.

As part of the barter service, once the server identifies the destination of the request, the server may also initiate a handshake between the first computing device and the second computing device. The server facilitates the exchange of information that establishes protocols of a communication between the first computing device and the second computing device via the network. After the handshake has been initiated, the server transmits the received request to the second computing device.

In act 312, the second computing device receives the transmitted request, and the second user evaluates the proposed exchange. The request may be, for example, displayed to the second user at the second computing device. In act 314, the second user may, for example, use an input device of the second computing device to interact with a GUI at the second computing device and generate an answer to the request. Alternatively, the second user may generate a textual answer using an input device. For example, the second user may interact with a "no" button or a "yes" button within the GUI at the second computing device, and the second computing device may generate the answer based on the interaction. The second computing device transmits the answer to the server.

In act 316, as part of the bartering service, the server analyzes the answer received from the second computing device and determines whether the answer is a positive answer or a negative answer. For example, first predetermined data may be generated at the second computing device when the "yes" button is selected within the GUI at the second computing device, and second predetermined data may be generated at the second computing device when the "no" button is selected within the GUI at the second computing device. The server may store the first predetermined data and the second predetermined data and compare the received answer to the stored first predetermined data and second predetermined data to determine whether the answer is a positive answer or a negative answer. The server may analyze the answer received from the second computing device based on the comparison. The method 300 moves to act 318, act 320, and act 322 (e.g., in parallel or in series) when the answer is a positive answer. The method 300 moves to act 324 when the answer is a negative answer.

In act 318, the server provides at least a portion of the second dataset to the first computing device and at least a portion of the first dataset to the second computing device. For example, the server transmits the data model included within the first dataset to the second computing device and transmits the API included within the second dataset to the first computing device via the network. The server may transmit additional data with the data model and the API, respectively. For example, as discussed below (see act 316), the server may transmit template contracts with the data model and the API, respectively.

In act 320, the server provides a contracting service. For example, the server sends template contracts to the first computing device or another computing device associated with the first enterprise, and the second computing device or another computing device associated. The template contracts may be stored in the database of the server or another memory in communication with the server. Executed contacts may be transmitted to the server for storage at the database. In one embodiment, each of the datasets stored in the database includes a corresponding contract associated with the respective dataset, and the server sends, for example, a first contract associated with the first dataset to the second computing device and sends a second contract associated with the second dataset to the first computing device when the answer is a positive answer.

In act 322, the server requests payment from the first user and/or the first enterprise, and the second user and/or the second enterprise for the exchange of the data model and the API. For example, the server may charge the first user and the second user for the handshake service and/or the storage of the first dataset and the second dataset. The charge may be a percentage of what the data model and/or the API costs on the open market, or the charge may be a fixed fee. For example, in act 326, the server communicates with other services outside of the network. For example, the server may communicate with an enterprise resource planning (ERP) software system. The server may communicate with the ERP to provide a payment service, invoicing, to request a payment, and/or to provide any number of other services. The server may communicate with other entities and/or devices outside of the network.

In act 324, the server provides a notification service. For example, the server provides the answer or a representation of the answer to the first computing device. The representation of the answer, for example, may be displayed on the GUI at the first computing device. In one embodiment, the server only provides the answer to the first computing device, for example, when the answer is a negative answer. In another embodiment, the server provides the answer to the first computing device when the answer is a positive answer or when the answer is a negative answer.

Further options may be provided. For example, the request and/or the answer/counteroffer may include a monetary value to be provided in addition to, for example, the data model included within the first dataset in exchange for the second dataset. If the answer is a positive answer, request for payment and payment of the monetary value by, for example, the first user or the first enterprise may be handled at acts 322 and 326, respectively. As another example, use of exchanged datasets (e.g., the data model included within the first dataset and the API included within the second dataset) may be limited in time (e.g., may be used for two months), a subscription may be required after a predetermined about of time, or a license to use but not resell a respective dataset may be provided as part of the exchange. In yet another example, use of the exchanged datasets may be limited as intellectual property. The exchanged contract templates may define the limits of the exchange. For example, the data model included within the first dataset may be reusable but not re-sellable, and the API included within the second dataset may only be used for internal purposes. Further handshakes between, for example, the first enterprise and the second enterprise may be required to alter the limits. Other limits may be provided.

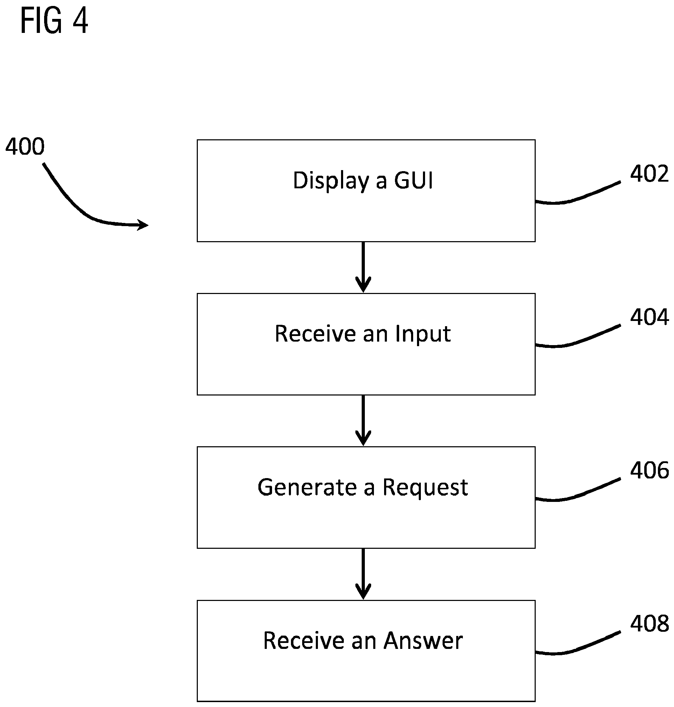

FIG. 4 shows a flowchart of another embodiment of a method 400 for exchanging products stored within a data management system. The method 400 may be performed using the system 100 shown in FIG. 1 or another system. The method 400 is implemented in the order shown, but other orders may be used. Additional, different, or fewer acts may be provided. Similar methods may be used for presenting information relevant to user activity.

In act 402, a display of a first client (e.g., a first computing device) displays a GUI that includes a representation of a first application associated with the first client and/or a first user of the first client, and a representation of a second application associated with a second client (e.g., a second computing device) and/or a second user of the second client. The first application and the second application are stored within a database of a server in communication with the first client and the second client via a network.

The GUI may include more and/or different graphical representations of more and/or different data-based products. For example, the GUI may include graphical representations of additional applications associated with the first client and/or the first user, and/or graphical representations of additional applications associated with the first client, the first user, other clients, other users, other enterprises, or any combination thereof.

In one embodiment, the server stores a plurality of datasets associated with different users, clients, and/or enterprises, respectively. For example, the plurality of datasets includes a first group of datasets associated with the first client and a second group of datasets associated with the second client. Each dataset of the first group of datasets includes a first graphical representation for the respective dataset, and each dataset of the second group of datasets includes a second graphical representation for the respective dataset. The first group of datasets includes the first application, and the second group of datasets includes the second application.

The first user at the first client may transmit identification information (e.g., a username and/or a password) to the server via, for example, the GUI to access, for example, the first graphical representations for the first group of datasets, the second graphical representations for the second group of datasets, other graphical representations for other groups of datasets associated with other users, computing devices, and/or enterprises, or any combination thereof. In one embodiment, the identification information identifies the first client, and the identification information is transmitted to the server in response to an action at the first client. For example, the first client automatically transmits the first identification information to the server when the first user interacts with GUI at the first client, when the first user opens an application associated with the GUI (e.g., that opens the GUI) at the first client, when the first user enters login information within the GUI at the first client, when another action occurs at the first client, or any combination thereof. Based on the transmitted identification information, the server may identify which datasets of the plurality of datasets stored in the database the first user, for example, may offer for exchange and/or which datasets of the plurality of datasets stored in the database the first user may request; the server may transmit the corresponding graphical representations to the first client based on this identification. Graphical representations of datasets of the plurality of datasets stored in the database other users may offer for exchange and/or may request may be transmitted by the server to corresponding computing devices for display.

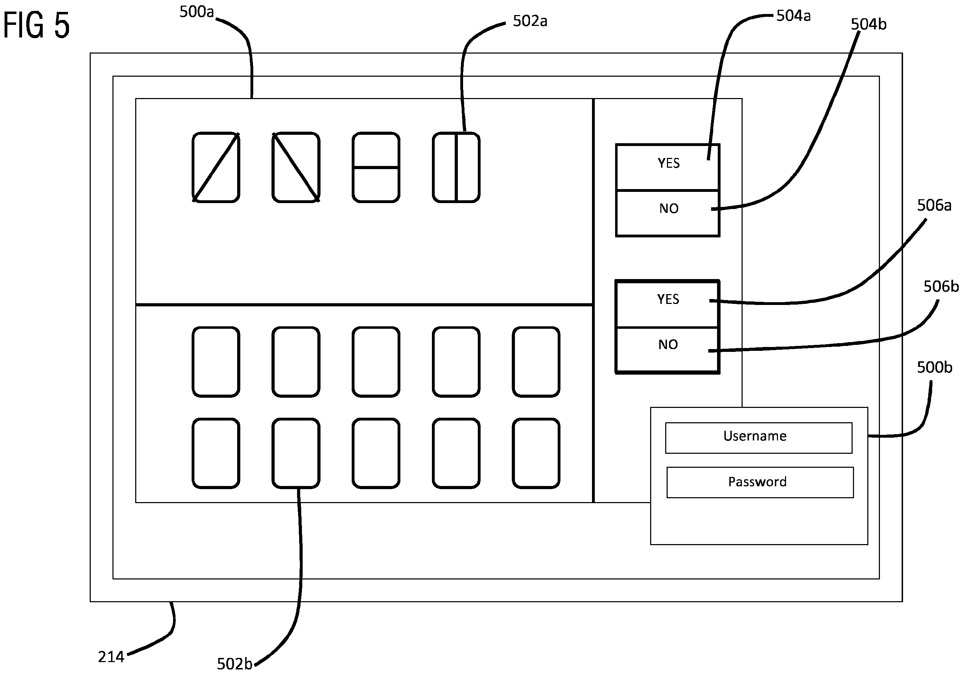

FIG. 5 shows an example of a GUI that may be used in the method 400. The GUI may be displayed at, for example, the first computing device 102a (e.g., on the display unit 214). The GUI may include one or more windows 500. For example, the GUI includes a first window 500a that displays graphical representations of datasets (e.g., including IoT applications) 502 that are available for exchange. For example, the first window 500a may display graphical representations of IoT applications associated with the first client and/or the first user 502a and graphical representations of IoT applications associated with other clients and/or other users 502b the first client and/or the first user is authorized to request.

The graphical representations of the IoT applications associated with the first client and/or the first user (e.g., a first group of graphical representations) 502a and the graphical representations of the IoT applications associated with the other clients and/or other users (e.g., a second group of graphical representations) 502b may be separated in any number of ways. For example, the first group of graphical representations 502a may be displayed at a top portion of the first window 500a, and the second group of graphical representations 502b may be displayed at a bottom portion of the first window 500a. The first group of graphical representations 502a may be separated from the second group of graphical representations 502b in other ways, and/or the first group of graphical representations 502a may be identified as being associated with the first client and/or the first user without separating the first group of graphical representations 502a and the second group of graphical representations 502b. For example, the graphical representations of the first group of graphical representations 502a may be highlighted with a particular color (e.g., yellow or white) and/or may be displayed with a particular icon.

As another example, the GUI may include a second window 500b in which identification information (e.g., a username and/or a password) may be entered by, for example, the first user with one or more input devices (e.g., a mouse and a keyboard) at the first client. The GUI may include more, fewer, and/or different windows, tabs, buttons, and/or other interfaces.

For example, depending on whether the client is generating or receiving the request (e.g., the second client), the associated GUI may include one or more indicators 504 and/or buttons 506. For example, when the client is generating the request and receiving the answer (e.g., the first client), the GUI may include a first, "yes" indicator 504a and a second, "no" indicator 504b. The "yes" indicator 504a may be displayed or highlighted within the GUI at, for example, the first client when the answer is a positive answer, and the "no" indicator 504b may be displayed or highlighted within the GUI at, for example, the first client when the answer is a negative answer. The answer may be displayed within the GUI in other ways (e.g., textually).

When the client is receiving the request and generating the answer (e.g., the second client), the GUI may include a first, "yes" button 506a and a second, "no" button 506b. The user (e.g., the second user) may interact with the "yes" button 506a or the "no" button 506b within the GUI using an input device at a client (e.g., the second client) to generate the answer to the request. The answer may be generated within the GUI in other ways (e.g., with a keyboard to generate a textual answer).

In act 404, a first processor of the first client receives an input from an input device at the first client (e.g., from the first user interacting with an input device at the first client). The input device may be any number of different types of input devices including, for example, a mouse, a touchscreen, or a keyboard. The received input identifies selection of, for example, the representation of the first application within the GUI and/or the representation of the second application within the GUI. The received input may identify the selection of representations of additional and/or different applications and/or datasets.

In act 406, the first processor generates a request based on the input received in act 404. For example, the first processor may be programmed to recognize that a first representation to be selected in time corresponds to an application and/or dataset being offered in an exchange, and a second representation to be selected in time corresponds to an application and/or dataset being requested in the exchange. Alternatively or additionally, the first processor may be programmed to recognize that selection(s) within in a first portion of the GUI correspond to application(s) and/or dataset(s) being offered in the exchange, and selection(s) within a second portion of the GUI correspond to application(s) and/or dataset(s) being requested in the exchange. The first processor may generate the request based on this analysis by the first processor. For example, the generated request may be a request for the second application in exchange for the first application. Alternatively, the request may be textual and may be generated by the first user, for example, using the input device at the first client.

The first client transmits the generated request to a second processor of the second client via the network and the server (e.g., a third processor of the server). The second user generates an answer at the second client in response to the transmitted request. The second client transmits the answer to the server via the network.

In act 408, the first processor of the first client receives the answer or the requested application (e.g., the second application) based on whether the answer generated at the second client is a positive answer or a negative answer. For example, when the answer is a negative answer, the first processor of the first client receives the answer from the second client via the server. When the answer is a positive answer, the first client (e.g., the first processor of the first client) receives the requested application (e.g., the second application) from the server (e.g., the database of the server). In one embodiment, when the answer is a positive answer, the first processor of the first client also receives the answer from the second client via the server. The display of the first client displays the answer. For example, the display of the first client displays the answer within the GUI at the first client. The answer may be displayed at the first client textually or via a graphical icon or visual indicator within the GUI.

The method 400 may be repeated a number of times. For example, when the received answer is a negative answer, the first processor of the first client may receive another input from the first user interacting with an input device at the first client. The other received input may identify selection of, for example, a representation of a third application within the GUI. The third application may be associated with the second client. Acts 404-408 may be repeated based on, for example, the selection of the representation of the third application.

When the answer generated at the second client is a positive answer and the first client receives the requested application, the first processor of the first client may download the received application and/or run the received application. Any use and/or storage time constraints defined for the received application may be monitored by, for example, the first processor of the first computing device, the second processor of the second computing device, the third processor of the server, or any combination thereof starting when the server transmits the requested application, when the first client receives the requested application, or when the first user runs the first application for the first time.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is provided to comply with 37 C.F.R. 51.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is therefore intended that the foregoing detailed description be regarded as illustrative rather than limiting, and that it be understood that it is the following claims, including all equivalents, that are intended to define the spirit and scope of this invention.

## Claims

1. A method for exchanging products stored within a data management system, the method comprising:
providing a database comprising a plurality of datasets, a first dataset of the plurality of datasets being associated with a first client in communication with the database, a second dataset of the plurality of datasets being associated with a second client in communication with the database;
receiving, by a processor in communication with the database, a request for the second dataset in exchange for the first dataset;
determining, by the processor, a source of the request for the second dataset in exchange for the first dataset;
comparing, by the processor, the determined source to user identification data of the first dataset;
transmitting, by the processor, the request to the second client based on the comparison;
receiving, by the processor, an answer to the request from the second client; and
providing, by the processor, at least a portion of the second dataset to the first client and at least a portion of the first dataset to the second client when the received answer is a positive answer.

2. The method of claim 1, further comprising:
identifying, by the processor, the second client based on the received request; and
initiating, by the processor, a handshake between the first client and the second client.

3. The method of claim 1 or 2, wherein the first dataset represents code, an application programming interface (API), a data model, a configuration, an application, or any combination thereof, and
wherein the second dataset represents code, an application programming interface (API), a data model, a configuration, an application, or any combination thereof.

4. The method of any of the preceding claims, further comprising:
receiving, by the database, the first dataset from the first client and the second dataset from the second client; and
storing, by the database, the first dataset and the second dataset.

5. The method of any of the preceding claims, further comprising providing, by the processor, the answer to the first client.

6. The method of any of the preceding claims, wherein the request is a first request, and the answer is a first answer,
wherein a third dataset of the plurality of datasets is associated with the first client,
wherein the method further comprises:
receiving, by the processor, a second request for the second dataset from the first client, the second request being a request for the second dataset in exchange for the third dataset;
transmitting, by the processor, the second request to the second client;
receiving, by the processor, a second answer from the second client in response to the second request;
providing, by the processor, at least a portion of the second dataset to the first client and at least a portion of the third dataset to the second client when the received second answer is a positive answer.

7. The method of any of the preceding claims, wherein the answer is a first answer,
wherein the plurality of datasets further comprise a third dataset, the third dataset being associated with the second client,
wherein the method further comprises:
receiving, by the processor, a request for the first dataset from the second client, the request for the first dataset being a request for the first dataset in exchange for the third dataset;
transmitting, by the processor, the request for the first dataset to the first client;
receiving, by the processor, a second answer from the first client in response to the request for the first dataset;
providing, by the processor, at least a portion of the third dataset to the first client and at least a portion of the first dataset to the second client when the received second answer is a positive answer.

8. The method of any of the preceding claims, further comprising providing contract documentation to the first client and the second client, respectively, when the answer is the positive answer.

9. The method of any of the preceding claims, wherein the plurality of datasets include a first group of datasets associated with the first client and a second group of datasets associated with the second client, each dataset of the first group of datasets including a first graphical representation for the respective dataset and each dataset of the second group of datasets including a second graphical representation for the respective dataset, and
wherein the method further comprises transmitting, by the processor, the first graphical representations to the first client and the second graphical representations to the second client, the first graphical representations being displayable by a first graphical user interface (GUI) at the first client and the second graphical representations being displayable by a second GUI at the second client.

10. A system for exchanging stored products, the system comprising:
a database comprising a first dataset and a second dataset, the first datasets being associated with a first client in communication with the database, the second dataset being associated with a second client in communication with the database, each dataset of the first dataset and the second dataset representing computer code, an application programming interface (API), a data model, a computer system configuration, an application, or any combination thereof;
and
a processor in communication with the database, the processor being configured to:
receive a request for the second dataset in exchange for the first dataset from the first client;
identify the second client based on the received request;
transmit the request to the second client;
receive an answer to the request from the second client; and
provide at least a portion of the second dataset to the first client and at least a portion of the first dataset to the second client when the received answer is a positive answer.

11. The system of claim 10, wherein the database is configured to:
receive the first dataset from the first client and the second dataset from the second client; and
store the first dataset and the second dataset.

12. The system of claim 10 or 11, wherein the processor is further configured to:
determine a source of the request for the second dataset in exchange for the first dataset;
compare the determined source to user identification data of the first dataset; and
determine whether the first dataset is associated with the determined source based on the comparison,
wherein the transmission of the request to the second client comprises transmission of the request to the second client when the first dataset is associated with the determined source.

13. The system of any of claims 10 to 12, wherein the processor is further configured to provide the answer to the first client.

14. The system of any of claims 10 to 13, wherein the request is a first request, and the answer is a first answer,
wherein the database further comprises a third dataset, the third dataset being associated with the first client,
wherein the processor is further configured to:
receive a second request for the second dataset from the first client, the second request being a request for the second dataset in exchange for the third dataset;
transmit the second request to the second client;
receive a second answer from the second client in response to the second request;
provide at least a portion of the second dataset to the first client and at least a portion of the third dataset to the second client when the received second answer is a positive answer.

15. The system of any of claims 10 to 14, wherein the answer is a first answer,
wherein the database further comprises a third dataset, the third dataset being associated with the second client,
wherein the processor is further configured to:
receive a request for the first dataset from the second client, the request for the first dataset being a request for the first dataset in exchange for the third dataset;
transmit the request for the first dataset to the first client;
receive a second answer from the first client in response to the request for the first dataset;
provide at least a portion of the third dataset to the first client and at least a portion of the first dataset to the second client when the received second answer is a positive answer.

16. The system of any of claims 10 to 15, wherein the processor is further configured to provide contract documentation to the first client and the second client, respectively, when the answer is the positive answer.

17. A method for exchanging products stored within a data management system, the method comprising:
displaying, by a display of a first client, a graphical user interface (GUI), the GUI including a representation of a first application associated with the first client, a first user, or the first client and the first user, and a representation of a second application associated with a second client, a second user, or the second client and the second user, the first application and the second application being stored at a database in communication with the first client and the second client;
receiving, by a first processor of the first client, an input from the first user at the first client, the input identifying selection of the representation of the first application within the GUI, selection of the representation of the second application within the GUI, or the selection of the representation of the first application and the selection of the representation of the second application within the GUI, the processor being in communication with the display;
generating, by the first processor, a request for the second application in exchange for the first application based on the received input; and
receiving, by the first processor, an answer from a second processor of the second client via a third processor, the third processor being in communication with the first processor and the database, receiving, by the first client, the second application from the database when the answer is a positive answer, or a combination thereof, the database configured to transmit the first application to the second client when the answer is the positive answer.

18. The method of claim 17, further comprising:
receiving, by the first processor, an answer to the request for the second application in exchange for the first application from the third processor; and
displaying, by the display, the answer.

19. The method of claim 18, wherein the input is a first input, and the request is a first request,
wherein the GUI also includes a representation of a third application, the third application being associated with the first client, and
wherein the method further comprises:
receiving, by the first processor, a second input from the first user at the first client;
generating, by the first processor, a second request based on the received second input, the second request being for the second application in exchange for the third application; and
receiving, by the first client, the second application from the database when an answer to the second request from the second client is a positive answer.

20. The method of any of claims 17 to 19, further comprising:
transmitting, by the first processor, an identification associated with the first client, the first user, or the first client and the first user to the third processor; and
receiving, by the first processor, the representation of the first application associated with the first client, the first user, or the first client and the first user in response to the transmitting of the identification associated with the first client, the first user, or the first client and the first user.
